# EUROPÄISCHE PATENTSCHRIFT

(11) **EP 3 216 824 B1**
(45) Veröffentlichungstag und Bekanntmachung des Hinweises auf die Patenterteilung: **07.06.2023**
(21) Anmeldenummer: 17159527.5
(22) Anmeldetag: 07.03.2017
(51) Int. Cl.: C08J 7/04, B29C 64/153

(54) **VERFAHREN ZUM BEHANDELN EINES FORMTEILS, VERWENDUNG EINES HILFSMITTELS IN EINEM VERFAHREN ZUM BEHANDELN EINES FORMTEILS UND VORRICHTUNG ZUM DURCHFÜHREN EINES VERFAHRENS ZUM BEHANDELN EINES FORMTEILS**
METHOD FOR TREATING A MOULDED PART, USE OF AN AUXILIARY AGENT IN A METHOD FOR TREATING A MOULDED PART AND DEVICE FOR CARRYING OUT A METHOD FOR TREATING A MOULDED PART
PROCÉDÉ DE TRAITEMENT D'UNE PARTIE DE MOULE, UTILISATION D'UN MOYEN AUXILIAIRE DANS UN PROCÉDÉ DE TRAITEMENT D'UNE PARTIE DE MOULE ET DISPOSITIF DESTINÉ À EXÉCUTER UN PROCÉDÉ DE TRAITEMENT D'UNE PARTIE DE MOULE

(30) Priorität: 11.03.2016 DE 102016104545
(43) Veröffentlichungstag der Anmeldung: 13.09.2017
(73) Patentinhaber: DyeMansion GmbH, 82152 Planegg (DE)
(72) Erfinder: Neininger, Markus, 81375 München (DE); Ewald, Felix, 81375 München (DE); Kramer, Philipp, 81375 München (DE)
(74) Vertreter: Kuhnen & Wacker Patent- und Rechtsanwaltsbüro PartG mbB

(56) Entgegenhaltungen:
- DE-A1-102014 112 509
- US-A1- 2005 059 757

## Beschreibung

### Technisches Gebiet

Die Erfindung betrifft ein Verfahren zum Behandeln von pulverbasiert additiv hergestellten Formteilen und eine Verwendung eines Hilfsmittels in einem Verfahren zum Behandeln von pulverbasiert additiv hergestellten.

### Stand der Technik

Es ist bekannt, dass Kunststoffgegenstände oder Gegenstände aus Verbundwerkstoffen bzw. Kunststoffformteile oder Verbundwerkstoffformteile in einem generativen bzw. additiven Fertigungsverfahren, beispielsweise in einem Sinterverfahren, hergestellt werden können. Bei einem generativen bzw. additiven Fertigungsverfahren im Sinne der vorliegenden Anmeldung werden die Gegenstände schichtweise aufgebaut. Die generativen bzw. additiven Fertigungsverfahren werden nachfolgend allgemein als 3D-Druckverfahren bzw. Druckverfahren bezeichnet. Als Ausgangsmaterial für die in einem 3D-Druckverfahren herzustellenden Gegenstände bzw. Formteile können etwa Polyamide oder thermoplastisches Polyurethan verwendet werden, für Verbundwerkstoffformteile beispielsweise Materialien, die Glaskugeln bzw. -kügelchen, Carbonfaser und/oder Aluminium umfassen.

Die Verwendung derartiger Kunststoffe oder Verbundwerkstoffe bzw. die Herstellung von Kunststoffgegenständen oder Verbundwerkstoffgegenständen in einem 3D-Druckverfahren haben den Nachteil, dass die Oberfläche der Gegenstände porös, also nicht geschlossen, ist und damit einerseits einem erhöhten Verschleiß unterliegen kann und andererseits durch die poröse, nicht geschlossene Oberflächenstruktur Schmutz verhältnismäßig leicht an der Oberfläche haften bleibt. Die Ästhetik des Gegenstandes kann so erheblich beeinträchtigt werden. Darüber hinaus kann die poröse Oberfläche der Gegenstände die Haptik negativ beeinflussen. Ferner können die Gegenstände je nach verwendetem Druckmaterial Wasser bzw. Feuchtigkeit aufnehmen, was die Struktur und/oder die Festigkeit bzw. Stabilität der Gegenstände negativ beeinflussen kann.

Um die poröse Oberfläche von solchen Gegenständen zumindest teilweise zu beseitigen, ist es im Stand der Technik bekannt, die Oberfläche der Kunststoffgegenstände zu schleifen und/oder zu polieren. Damit kann die Oberfläche der Kunststoffgegenstände zwar glatter ausgestaltet werden. Allerdings ist ein weitgehendes Beseitigen der Poren nur mit erheblichem Aufwand möglich, sodass in der Regel auch nach dem Polieren nicht sichergestellt ist, dass kein Schmutz an der Oberfläche haften bleibt.

Ein Polieren der Oberfläche ist außerdem nicht in jedem Fall möglich. Weil beim Polieren Material von der Oberfläche abgetragen wird, kann sich die Geometrie des Gegenstandes ändern, was in manchen Fällen nicht erwünscht ist. Zudem kann selbst durch ein Polieren der Oberfläche nicht sichergestellt werden, dass diese fluidabweisend, insbesondere wasserabweisend, sowie wasserdicht ist. Je nach verwendetem Material bei der Herstellung solcher Kunststoffgegenstände ist es jedoch erforderlich, dass die Oberfläche wasserabweisend bzw. wasserdicht ist.

Um dieser Problematik zu begegnen, wurde ein Verfahren zum Imprägnieren und oder Beschichten von in einem 3D-Druckverfahren hergestellten Formteilen entwickelt, das in der Patentanmeldung DE 10 2014 112 509 A1 offenbart ist.

In diesem Dokument ist offenbart, dass das ein Lösungsmittel-/Kunststoffgemisch (Stoffgemisch) eine besonders gute kapillaraktive Eigenschaft aufweist, sodass aufgrund der Kapillaraktivität das Stoffgemisch in die Poren der porösen Oberfläche der Formteile eindringen kann, sodass sich der Kunststoff bzw. das Kunststoffgemisch des Stoffgemisches nach dem Trocknen bzw. Aushärten in den Poren der porösen Oberfläche verankert, sodass die Oberfläche des Formteils gleichmäßig versiegelt ist und eine weitgehend glatte und porenfreie Oberfläche geschaffen wird. Aufgrund der Verankerung des Kunststoffes bzw. des Kunststoffgemisches des Stoffgemisches in den Poren der Oberfläche wird zudem sichergestellt, dass das Stoffgemisch besonders gut an der Oberfläche haftet und ein Abplatzen des Stoffgemisches von der Oberfläche des Formteils weitgehend verhindert wird.

Ferner ist offenbart, dass sich das Imprägnierverfahren besonders gut für Formteile eignet, die in einem pulverbasierten Fertigungs- bzw. Druckverfahren hergestellt werden und, dass je nach Anteil des Kunststoffes bzw. Kunststoffgemisches in dem Stoffgemisch extrem kleine Poren (bis zu 1 µm Durchmesser) verschlossen werden können, wobei durch die Verwendung eines in dem Lösungsmittel auflösbaren Kunststoffes bzw. Kunststoffgemisches zudem erreicht wird, dass die mit dem Stoffgemisch behandelte Oberfläche des Formteils schmutzabweisend und wasserabweisend bzw. wasserdicht wird. Die schmutz- bzw. wasserabweisende Eigenschaft der Oberfläche wird im Wesentlichen dadurch erreicht, dass durch das Aufbringen des Stoffgemisches eine besonders glatte Oberfläche erzeugt wird, die ein Anhaften von Schmutz bzw. Wasser an der Oberfläche weitgehend verhindert.

Bei einem solchem Imprägnierverfahren werden jedoch zumeist hohe Anteile leicht flüchtiger organische Lösungsmittel, beispielsweise Aceton oder Butylacetat, eingesetzt, um ein Trocknen der imprägnierten Formteile nach dem Imprägnieren zu erleichtern. Der Einsatz solcher Lösungsmittel kann jedoch zu einer erheblichen Geruchsbelästigung während des Imprägnierens und des Trocknens führen und ist möglicherweise unter Gesundheitsaspekten nicht unbedenklich. Hierdurch ergibt sich ein Bedarf, vermehrt weniger flüchtige, weniger stark riechende und/oder gesundheitlich unbedenklichere Lösungsmittel zu verwenden.

Eine Notwendigkeit beim Imprägnieren und/oder Beschichten von Formteilen ist allerdings ein Entfernen überschüssigen Imprägnier-/Beschichtungsmittels von der Oberfläche, beispielsweise durch Schleudern in einer Trommel und anschließendes Nachtrocknen, beispielsweise in einem Trockenofen, auf solche Weise, dass eine gleichmäßige Oberfläche von hoher Güte erhalten wird. Diese herkömmlichen Vorgehensweisen sind jedoch insofern nicht zufriedenstellend, als gelegentlich ein fleckiges Erscheinungsbild auftritt oder Unregelmäßigkeiten an der Oberfläche entstehen, was zu einem erhöhten Prüfaufwand führt. Die Formteile mit unzureichender Oberflächengüte müssen dann nachimprägniert/-beschichtet werden, was aber zu Abweichungen bei der Dicke der Beschichtungsschicht gegenüber den nicht nachbehandelten Formteilen führen kann und somit keine zufriedenstellende Vorgehensweise darstellt, insbesondere da sich auch durch das Nachbehandeln die Flecken nicht immer zufriedenstellend entfernen lassen.

In diesem Zusammenhang stellt sich die Frage, warum pulverbasiert additiv hergestellte Formteile zumeist nicht auf herkömmliche Weise lackiert werden. Im Einzelfall ist dies durchaus möglich, jedoch bieten additive Herstellungsverfahren eben gerade den Vorteil, dass sich komplexe Geometrien verwirklichen lassen, die mit anderen Herstellungsverfahren nicht oder nur mit unverhältnismäßig hohem Aufwand erzielbar sind. Bei solchen Geometrien würde eine hohe Viskosität eines Lackes, Beschichtungsmittels, Imprägniermittels o.ä. verhindern, dass alle Stellen des Formteils erreicht werden und auch ein Eindringen in Poren oder anders geartete Hohlräume des Formteils wäre nicht optimal. Außerdem sind die Schichtdicken herkömmlicher Lackierungen für solche Anwendungen oft nicht praktikabel, da ihr Auftrag die Geometrie bereits zu stark verändern würde.

### Aufgabe der Erfindung

Die zuvor beschriebenen Problematiken sind bei der wünschenswerten Verwendung wenig flüchtiger, schwerer und langsamer verdampfender Fluide, insbesondere bei der Verwendung von Wasser, aufgrund des langsameren Trocknens besonders ausgeprägt. Es besteht somit ein Bedarf, eine technische Lösung zu entwickeln, mit der bei imprägnierten und/oder beschichteten, pulverbasiert additiv gefertigten Formteilen selbst bei Verwendung eines wenig flüchtigen Fluids, insbesondere von Wasser, als Bestandteil eines Imprägnier- und/oder Beschichtungsmittels, eine hohe Oberflächengüte erzielt werden kann, was die der vorliegenden Erfindung zugrundeliegende Aufgabe ist.

### Bearbeitungsverfahren

Diese Aufgabe wird durch den Gegenstand des Anspruchs 1 gelöst, nämlich durch ein Verfahren zum Behandeln eines pulverbasiert additiv gefertigten Formteils, das aus einem ersten Kunststoff oder einem Verbundwerkstoff hergestellt ist, bei dem das Formteil mit einem Stoffgemisch zum Imprägnieren und/oder Beschichten des Formteils in Kontakt gebracht wird, wobei das Stoffgemisch einen zweiten Kunststoff und wenigstens ein Fluid enthält, und danach mit einem Hilfsmittel in Kontakt gebracht wird, das dazu geeignet ist, das Stoffgemisch oder Bestandteile desselben dadurch aufzunehmen, dass diese der Oberfläche des Hilfsmittels anhaften, in Poren oder anders geartete Hohlräume des Hilfsmittels eindringen, von dem Hilfsmittel absorbiert und/oder von dem Hilfsmittel chemisch gebunden werden.

Durch das Aufnehmen des überschüssigen Stoffgemischs oder von Bestandteilen desselben mit dem Hilfsmittel wird der Vorteil erzielt, dass sich durchgehend fleckfreie Oberflächen auf den behandelten Formteilen erzielen lassen. In den Sicken der Formteile vorliegendes oder an einem Formteil herunterlaufendes, überschüssiges Stoffgemisch kann von dem Hilfsmittel aufgenommen werden. Ein Kontakt mehrerer, gleichzeitig der Behandlung unterworfener Formteile und auch ein Kontakt der Formteile zu dem Gefäß, Raum oder Behältnis, in dem die Behandlung stattfindet, kann weitgehend unterbunden werden.

Außerdem ist bei einem solchen Vorgehen ein Nachtrocknen der Formteile nicht mehr erforderlich, da die Empfindlichkeit der Oberfläche der imprägnierten und/oder beschichteten Formteile nach dem Kontakt mit dem Hilfsmittel bereits derart gering ist, dass bei einer normalen Handhabung der Formteile, beispielsweise bei einem Umlagern oder einem Verpacken, die Oberfläche vor einer Verschlechterung ihrer Güte überraschend gut geschützt ist. Selbst wenn die Oberfläche der Formteile nach dem Inkontaktbringen mit dem Hilfsmittel noch mit Resten des Fluids des Stoffgemischs benetzt wäre, würde dies ihrer weiteren Handhabung und auch der Verpackung oder dem Versand nicht entgegenstehen. Dies kommt unter anderem auch dadurch zustande, dass pulverbasiert additiv gefertigte Formteile einen nicht unerheblichen Teil eines auf ihre Oberfläche aufgebrachten Stoffgemisches in ihren Poren oder anders gearteten fertigungsbedingten Hohlräumen aufnehmen können.

Mit dem erfindungsgemäßen Verfahren kann also eine bisher unerreichte Durchgängigkeit der Oberflächengüte imprägnierter und/oder beschichteter pulverbasiert additiv gefertigter Formteile, selbst bei Verwendung langsam trocknender bzw. wenig flüchtiger Fluide im Stoffgemisch für die Imprägnierung und/oder Beschichtung, erzielt werden. Durch den geringen Prüf- und Nachbehandlungsbedarf und auch dadurch, dass kein Nachtrockenschritt erforderlich ist, können zudem bedeutende Kostenvorteile gegenüber herkömmlichen Verfahren erzielt werden.

Es ist möglich, dass die Formteile am Ende des Verfahrens in Kontakt mit dem Hilfsmittel belassen werden. Dies ist insbesondere dann vorgesehen, wenn das Hilfsmittel von solcher Beschaffenheit ist, dass es auch als Polster- bzw. Verpackungsmaterial verwendet werden kann. In einem solchen Fall wird ein Effizienzvorteil erzielt, da ein Schritt des Abtrennens nicht durchgeführt werden muss und da außerdem das Verpacken, beispielsweise für die Lagerung oder den Versand, erleichtert wird, da die Formteile bereits in ein Polstermaterial eingebettet erhalten werden.

Vorteilhafte Weiterbildungen des erfindungsgemäßen Verfahrens zum Behandeln eines pulverbasiert additiv gefertigten Formteils sind die Gegenstände der abhängigen Ansprüche 2 bis 6.

Je nach Anwendung kann es wünschenswert sein, das Hilfsmittel nach dem Inkontaktbringen mit den pulverbasiert additiv gefertigten Formteilen wieder von diesen zu trennen, beispielsweise für eine erneute Verwendung desselben, möglicherweise nach einem Regenerationsschritt, was insbesondere unter Gesichtspunkten der Kostenreduktion und der effizienten Ressourcennutzung vorteilhaft sein kann. Es kann also, in Abhängigkeit, von den Kosten, den Umwelteigenschaften und anderen mit dem Hilfsmittel in Zusammenhang stehenden Parametern vorteilhaft sein, Formteile in einem Hilfsmittel zu belassen oder das Hilfsmittel wieder von diesen abzutrennen. Das Abtrennen kann beispielsweise dadurch erfolgen, dass die Formteile manuell oder maschinell aus dem Hilfsmittel entnommen werden, oder beispielsweise dadurch, dass mit einem Sieb oder einer ähnlichen Vorrichtung Formteile und Hilfsmittel getrennt werden.

Das in dem Stoffgemisch enthaltene Fluid kann vorteilhafterweise N-Butylacetat, Butan-1-ol, Isotridecylalkohol, 2-Butoxy-ethanol, Aceton oder Wasser oder ein Gemisch aus wenigstens zwei der genannten Fluide enthalten. Die Auswahl eines Fluids oder die Zusammenstellung eines Gemisches verschiedener Fluide kann unter Berücksichtigung mehrere Aspekte erfolgen, beispielsweise der Fähigkeit, einen bestimmten Kunststoff zu lösen oder zu suspendieren, der Flüchtigkeit, der Kosten, und/oder der Gesundheits- und/oder Umweltauswirkungen. Jedes der genannten Fluide führt in jeweils unterschiedlichem Ausmaß zu der Verwirklichung dieser Vorteile.

Das Hilfsmittel kann das Stoffgemisch oder Bestandteile desselben unter anderem dadurch aufnehmen, dass dieses bzw. diese der Oberfläche des Hilfsmittels anhaften, in Poren oder anders geartete Hohlräume des Hilfsmittels eindringen, vom Hilfsmittel absorbiert und/oder vom Hilfsmittel chemisch gebunden werden. Welche Art von Hilfsmittel gewählt wird und folglich, wie das Aufnehmen erfolgt, kann unter Berücksichtigung mehrere Aspekte festgelegt werden, beispielsweise: Kosten, spezifisches Gewicht, Fähigkeit einen gegebenen Kunststoff anzunehmen, Widerverwertbarkeit und Regenerierbarkeit. Verschiedene Hilfsmittel führen zu einer Verwirklichung dieser Vorteile in jeweils unterschiedlichem Ausmaß.

Die Konzentration des Kunststoffs in dem Stoffgemisch kann in extremen Fällen, beispielsweise beim Imprägnieren und/oder Beschichten sandbasierter 3D-Druck-Formteile bis zu 75 Gew.-% betragen, sie beträgt aber normalerweise 0,1 bis 30 Gew.-%, bevorzugt 0,2 bis 28 Gew.-%, ferner bevorzugt 0,5 bis 26 Gew.-% und insbesondere bevorzugt 1 bis 12 Gew.-%. Die Vorteile verschiedener Konzentrationen kommen je nach Anwendung und je nachdem, welche Parameter erzielt werden sollen, mehr oder weniger zum Tragen. Beispielsweise kann bei den geringeren Kunststoffkonzentrationen ein besseres Eindringen in Poren und/oder anders geartete Hohl- oder Freiräume der Formteile erzielt werden. Dagegen führen die hohen Konzentrationen eher zu einer höheren Schichtdicke einer an der Oberfläche eines Formteils gebildeten Kunststoffschicht, jedoch teils auch zu mehr Problemen, wie z.B. Neigung zur Fleckenbildung, beim Trocknen.

Das Hilfsmittel kann ein Trockenmittel, beispielsweise ein Zeolith, Natriumsulfat, Magnesiumsulfat, Blaugel, Aluminiumoxid, oder ein Molekularsieb, bevorzugt aber Kieselgur, Kieselgel oder ein Gemisch derselben, von diesen stärker bevorzugt Kieselgel, sein. Diese Mittel werden normalerweise dafür verwendet, Feuchtigkeit aus der Luft aufzunehmen, beispielsweise, um Korrosion bei einem Transport zu vermeiden. Insofern werden diese Mittel im Rahmend der vorliegenden Erfindung, mit direktem Produktkontakt, zweckentfremdet und auf anhand des Standes der Technik nicht zu erwartende Weise eingesetzt. Entgegen der Erwartung eines Fachmannes, dass jedes Inkontaktbringen einer Oberfläche, auf die zuvor ein Stoffgemisch bzw. Imprägnier- und/oder Beschichtungsmittel aufgebracht wurde, das noch nicht getrocknet oder ausgehärtet ist, zwangsläufig zu einer Verschlechterung der erzielbaren Oberflächenqualität dieser Oberfläche führt, haben die Erfinder in zahlreichen Versuchen überraschend Hilfsmittel identifizieren können, bei deren Verwendung sogar eine im Vergleich zu den Resultaten herkömmlicher Verfahren verbesserte Oberflächengüte erzielt werden kann.

Insbesondere Kieselgel ist geeignet, überschüssiges Stoffgemisch in einem Verfahren zum Behandeln eines pulverbasiert additiv gefertigten Formteils aufzunehmen. Es hinterlässt dabei im Gegensatz zu vielen anderen Stoffen keine wahrnehmbaren oder nur geringfügige und leicht entfernbare Rückstände an/auf den Formteilen und führt zu keinen unerwünschten Unregelmäßigkeiten der Oberfläche. Bereits eine kurze Kontaktzeit eines behandelten Formteils mit Kieselgel, beispielsweise eine Minute, genügt, um eine Oberflächenunempfindlichkeit zu erzielen, die ausreicht, um die Oberfläche vor einer Verschlechterung durch normale Handhabung der Formteile, beispielsweise einem Umlagern oder Verpacken, zu schützen.

Das Hilfsmittel kann bevorzugt in Gestalt eines Granulates vorliegen, bevorzugt in Gestalt eines Kugel- oder Zylindergranulates, von diesen bevorzugt in Gestalt eines Zylindergranulates. Kugel- und Zylindergranulate sind jeweils Granulate die, abgesehen von herstellungsbedingten Formabweichungen, kugel-/kügelchenförmige bzw. zylinderförmige Granulatpartikel umfassen. Kugelgranulate weisen den Vorteil auf, dass es bei Bewegung des Granulates oder beim Bewegen eines Formteils in dem Granulat zu weniger mechanisch bedingtem Materialabtrag vom Granulat kommt als bei anderen Granulatpartikelformen, bei denen insbesondere Kanten und Ecken der Granulatpartikel abgerieben werden. Zylindergranulate haben sich aber in der Gesamtbetrachtung als besonders vorteilhaft erwiesen, da auch hier nur ein geringer Materialabtrag stattfindet und die Granulatpartikel im Vergleich zu Kugeln bzw. Kügelchen eine geringere Neigung zeigen, in zylindrische Hohlräume, beispielsweise Bohrungen einer Maschine oder eines Formteils zu gelangen und sich möglicherweise darin zu verklemmen. Durch die Verwendung von Zylindergranulaten wird somit letztlich die Abtrennung des Hilfsmittels vom behandelten Formteil erleichtert und eine vollständigere Abtrennung ermöglicht.

Die Größe der Partikel des Granulates unterliegt keiner grundsätzlichen Beschränkung. Es sollte aber sichergestellt werden, dass die Partikel nicht so groß und schwer sind, dass sie die zu behandelnden Formteile beschädigen können oder, dass sie nicht mehr an alle Stellen gelangen, an denen überschüssiges Stoffgemisch aufzunehmen ist. Andererseits dürfen die Partikel nicht zu fein sein, da dann mit einem verstärkten Anhaften an den Formteilen zu rechnen ist. Es ist also offensichtlich, dass die Partikelgröße auch abhängig von den Eigenschaften der zu behandelnden Formteile angepasst werden sollte. In vielen Fällen werden sich gute Resultate mit Granulat mit einer Partikelgröße (mittlere größte räumliche Ausdehnung entlang einer Achse des Partikels) der jeweiligen Granulatpartikel überwiegend in einem Bereich von 1 bis 10 mm, beispielsweise 2 bis 8 mm, insbesondere 3 bis 6 mm, im Fall der Verwendung eines Zylindergranulates jedoch auch mit einer grö-βeren Partikelgröße, von beispielsweise bis zu 20 mm, erzielen lassen.

### Verwendung des Hilfsmittels

Die Verwendung eines Hilfsmittels gemäß Anspruch 7 zum Aufnehmen eines Stoffgemischs und/oder von Bestandteilen desselben in einem Verfahren zum Behandeln eines pulverbasiert additiv gefertigten Formteils, hergestellt aus einem ersten Kunststoff oder einem Verbundwerkstoff, beispielsweise wie zuvor beschrieben, führt zu der Verwirklichung der ebenfalls zuvor beschriebenen vorteilhaften technischen Wirkungen im Hinblick auf die Verfahrenseffizienz und die erzielbare Oberflächengüte der behandelten Formteile in unterschiedlichem Ausmaß, je nach Gestaltung der individuellen Verfahrensparameter. Dabei nimmt das Hilfsmittel das Stoffgemisch oder Bestandteile desselben dadurch auf, dass diese der Oberfläche des Hilfsmittels anhaften, in Poren oder anders geartete Hohlräume des Hilfsmittels eindringen, von dem Hilfsmittel absorbiert und/oder von dem Hilfsmittel chemisch gebunden werden.

Für die erfindungsgemäße Verwendung gelten in Bezug auf das Formteil, das Stoffgemisch und das Hilfsmittel jeweils dieselbe Definition und/oder dieselben Beschränkungen wie sie für das Formteil, das Stoffgemisch und das Hilfsmittel des erfindungsgemäßen Verfahren wie vorstehend beschrieben definiert sind.

### Vorrichtung für das Behandlungsverfahren

Es wird ferner eine Vorrichtung zum Durchführen eines solchen Verfahrens mit einem Gefäß oder Raum zum Aufnehmen eines oder mehrerer der Formteile und des Hilfsmittels offenbart, wobei zumindest Teile der Vorrichtung manuell oder durch einen maschinellen Antrieb bewegbar sind, sodass eine relative Bewegung des Hilfsmittels in Bezug auf das Formteil bzw. die Formteile erzeugbar ist bzw. erzeugt wird oder umgekehrt.

Durch den Einsatz der offenbarten Vorrichtung kann die Verfahrenseffizienz gegenüber der rein manuellen Durchführung dank des Einsparens menschlicher Arbeitskraft gesteigert werden.

Eine vorteilhafte Weiterbildung der offenbarten Vorrichtung ist eine Vorrichtung, durch die das Formteil oder eine Mehrzahl der Formteile entweder in einem Korb mit durchbrochenem Boden und/oder wenigstens einer durchbrochenen Seitenwand oder in einer sonstigen für das Hilfsmittel durchlässigen Struktur in dem Hilfsmittel bewegbar ist oder, dass das Formteil bzw. die Formteile zusammen mit dem Hilfsmittel, beispielsweise durch bewegbare Schaufeln oder in einem bewegbaren Gefäß, bewegbar ist bzw. sind.

Das Bewegen der Formteile in einem Korb oder einem sonstigen für das Hilfsmittel durchlässigen Struktur in dem Hilfsmittel bietet den Vorteil eines einfachen Be- und Entladens mit/von Formteilen, gegebenenfalls sogar während des ununterbrochenen Betriebs der Vorrichtung. Das Bewegen der Formteile zusammen mit dem Hilfsmittel führt zu weniger reibendem Kontakt und damit zu weniger mechanischem Materialabtrag am Hilfsmittel.

Insbesondere kann ein Gitterkorb verwendet werden, in den die zu behandelnden Formteile gelegt werden. Dieser kann dann verschlossen und einmal in das Stoffgemisch für die Behandlung getaucht werden, kurz, für maximal eine Minute, hin und her gewendet werden, sodass ein Teil des überschüssigen Stoffgemisches von den Formteilen abtropft, und anschließend in dem Hilfsmittel, bevorzugt in Gestalt von Kieselgelgranulat, stärker bevorzugt in Gestalt von Kieselgel-Zylindergranulat, gewendet werden.

### Kurze Beschreibung der Figuren

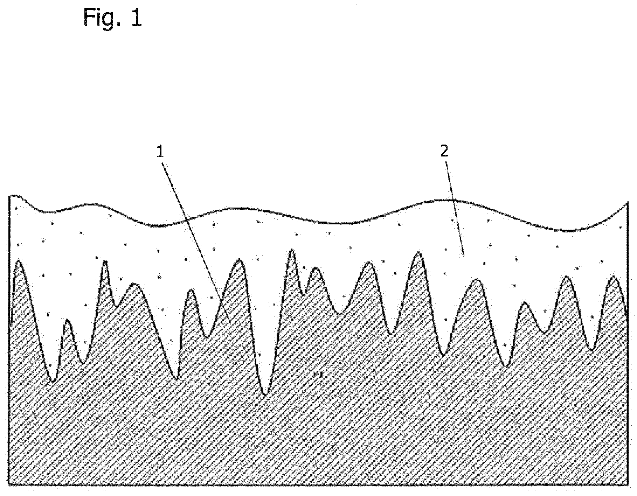

Fig. 1 stellt einen Abschnitt einer Oberfläche eines additiv hergestellten Formteils dar, wie es aussieht, nachdem es aus dem Stoffgemisch (z.B. Imprägniermittel) genommen wurde. Das Stoffgemisch befindet sich in Poren und/oder andersartigen mikroskopischen Hohlräumen des Formteils und bildet eine Schicht an dessen Oberfläche.

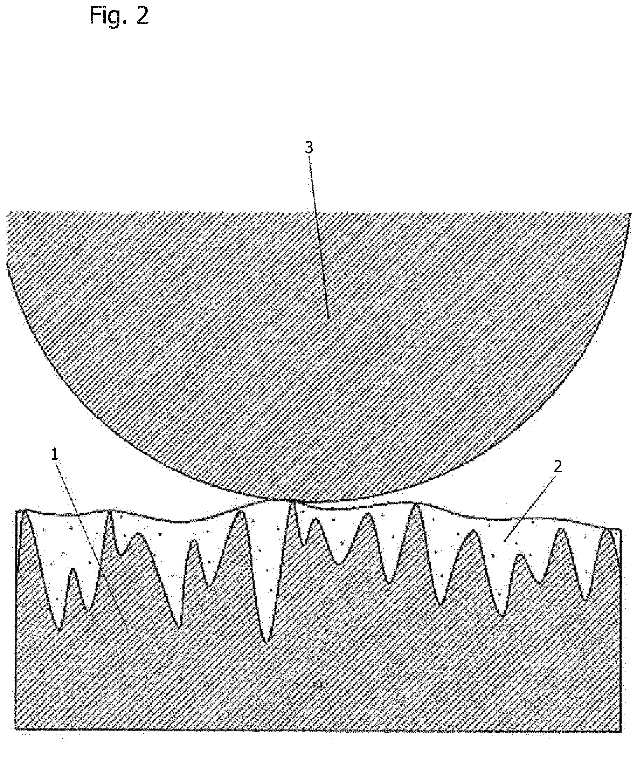

Fig. 2 zeigt, wie das Hilfsmittel, hier in Gestalt eines Kugelgranulates, das überschüssige Stoffgemisch aufnimmt, wobei der erwünschte Anteil in den Poren o.ä. zurückbleibt. Das Hilfsmittel zieht dabei aber auch genug Feuchtigkeit aus den Poren, sodass das zurückbleibende Stoffgemisch nicht mehr verlaufen kann, da es bereits zu dickflüssig bzw. teilweise getrocknet ist.

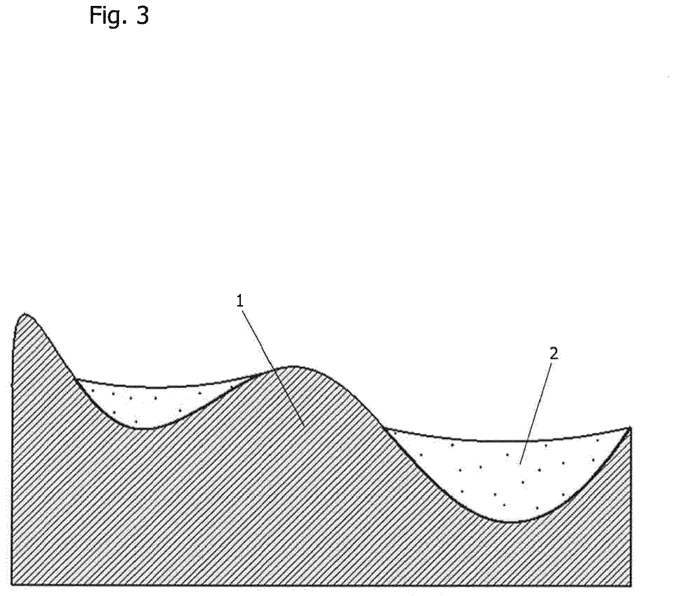

Fig. 3 zeigt Sicken, also makroskopische Strukturen, in denen sich bei der Trocknung an der Luft Stoffgemisch (z.B. Imprägniermittel) sammelt und in einer dicken Schicht festtrocknet. Dies führt zu ästhetisch nicht zufriedenstellenden Ergebnissen und verändert die Geometrie.

### Weitere Offenbarung der Erfindung

Die jeweiligen Aspekte der Erfindung werden nun genauer beschrieben.

Das Stoffgemisch zum Behandeln, insbesondere Imprägnieren und/oder Beschichten, der Formteile kann, um bestimmten Anforderungen zu genügen, 0,05 bis 15 Gew.-% eines Zusatzstoffes, vorzugsweise ausgewählt aus der Gruppe, umfassend Duftstoff, Farbstoff, Polytetrafluorethylen und Kombinationen hiervon, enthalten. Auch die Zumischung von Additiven für bessere hydrophobe Eigenschaften kann sich als vorteilhaft erweisen.

Damit kann beispielsweise ein unangenehmer Geruch des Lösungsmittels bzw. des Lösungsmittelgemisches in dem Stoffgemisch unterdrückt werden. Durch die Beigabe von Polytetrafluorethylen können Kunststoffgegenstände imprägniert werden, die nach dem Imprägnieren noch bessere Antihaft-Eigenschaften aufweisen, sodass Wasser und/oder Schmutz noch schwerer an der imprägnierten Oberfläche haften bleibt. Durch die Beigabe eines Farbstoffes kann der zu imprägnierenden Oberfläche zusätzlich ein bestimmter Farbton verliehen werden. In der Regel werden aber bereits zuvor gefärbte Formteile behandelt, da eine vorangestellte Färbung in Kombination mit dann folgender Behandlung, insbesondere Imprägnierung und/oder Beschichtung, zu besseren Ergebnissen im Hinblick beispielsweise auf die Farbbrillanz und den Glanz der erzielten Oberfläche führt.

Zur beispielhaften Veranschaulichung dieser Wirkung wurden Lab-Farbraummessungen mit einem Gerät der Firma X-Rite durchgeführt. Die zu bemessenden Proben waren durch selektives Lasersintern hergestellte violett eingefärbte Kunststoffformteile in Gestalt von Testplättchen mit den Maßen 50x25x4 mm. Diese wurden mit einem 3:1 mit destilliertem Wasser verdünnten Imprägniermittel durch eintauchen für eine Minute in dieses behandelt und sowohl vor als auch nach der Imprägnierung bemessen. Die unten dargestellten Delta-Werte (d-Werte) resultieren aus dem Vergleich der Messwerte vor der Imprägnierung mit den Messwerten nach der Imprägnierung und stellen die jeweiligen Differenzen dar. Die Farbmessung wurden unter D65/10 durchgeführt, das bedeutet, unter einem Licht, das dem natürlichen Tageslicht nachempfunden ist und diesem möglichst nahekommt.

Für den Vergleichsversuch mit herkömmlicher Vorgehensweise wurde das Testplättchen nach dem Tauchen in das Imprägniermittel geschleudert, um möglichst viel überschüssiges Imprägniermittel zu entfernen, und dann mit einem Warm- bzw. Heißluftgebläse in Gestalt eines handelsüblichen Föns getrocknet.

Für den Versuch nach dem erfindungsgemäßen Verfahren wurden die Formteile nach dem Tauchen in das Imprägniermittel für 30 Sekunden in Kieselgel-Kugelgranulat gewendet und nicht zusätzlich geschleudert oder auf andere Weise getrocknet.

Bezogen auf den Lab-Farbraum bedeutet eine Verschiebung auf der L-Achse eine Veränderung der Helligkeit, beziehungsweise der Luminanz. Eine Verschiebung auf der a-Achse bedeutet eine Verschiebung zwischen Grün- und Rotanteil einer Farbe und eine Verschiebung auf der b-Achse bedeutet eine Verschiebung zwischen Blau- oder Gelbanteil einer Farbe.

Die Bemessung führte zu den folgenden Ergebnissen:
Vergleichsversuch:
   - dL -0.82 (dunkler)
   - da 0.62 (rotverschoben)
   - db -0.56 (blauverschoben)
Nach dem erfindungsgemäßen Verfahren:
   - dL -0.87 (dunkler)
   - da 0.57 (rotverschoben)
   - db -0.52 (blauverschoben)

Subjektiv sorgt die Imprägnierung für eine Auffrischung der Farbe, was die Formteile brillanter und gesättigter wirken lässt. Zu sehen ist, dass dieser Effekt genauso bei den mit Kieselgel getrockneten Formteilen eintritt und dass kein nennenswerter Unterschied zu den mit Fön getrockneten Teilen sichtbar ist. Offensichtlich bleibt, obwohl die Formteile direkten Kontakt mit dem Kieselgel hatten genug Imprägnierung zur Erzielung des erwünschten Effekts in den Poren zurück.

Die Formteile, die in einem pulverbasierten Fertigungs- bzw. Druckverfahren hergestellt werden, können aus einem Material hergestellt sein, ausgewählt aus der Gruppe, umfassend Polyamid, insbesondere Polyamid 11 und Polyamid 12, thermoplastisches Polyurethan, aluminiumgefülltes Polyamid, insbesondere aluminiumgefülltes Polyamid 12, glasgefülltes Polyamid, carbonverstärktes Polyamid, Sand, Gips, Metall, Verbundwerkstoff, und Kombinationen hiervon.

Das 3D-Druckverfahren umfasst pulverbasierte additive Verfahren, insbesondere selektives Lasersintern (selective laser sintering, SLS), selektives Wärmesintern (selective heat sintering), Hochgeschwindigkeitssintern (high speed sintering, HSS) und (Tinten-)Strahl 3D-Druck (inkjet 3D-printing). Insbesondere können die Formteile im Fall der vorliegenden Erfindung selektiv lasergesintert sein.

Der Kunststoff und/oder das Kunststoffgemisch des Stoffgemisches kann/können ausgewählt sein aus der Gruppe, umfassend Acrylat, Polyamid, und Kombinationen hiervon. Der Kunststoff oder das Kunststoffgemisch des Stoffgemisches kann aber auch synthetische oder synthetisch hergestellte Harze umfassen. Ferner kann der Kunststoff oder das Kunststoffgemisch des Stoffgemisches Polystyrol, Polymethylmethacrylat, Polycarbonat, Polyethylenterephthalat und Acrylnitril-Butadien-Styrol umfassen. Es ist ausdrücklich nicht ausgeschlossen, dass der gleiche Kunststoff sowohl in dem Formteil als auch in dem Stoffgemisch enthalten ist, auch wenn dieser einmal als erster Kunstsoff und einmal als zweiter Kunststoff benannt wird. Unter technischen Gesichtspunkten stellt dies kein Problem dar. Zwar wird die Oberfläche des Formteils in einem solchen Fall durch das Lösungsmittel des Stoffgemisches angelöst, jedoch nicht in einem kritisch Ausmaß, da die Einwirkzeit mit typischerweise ca. einer Minute dafür nicht lang genug ist. Im Gegenteil führt diese Anlösung sogar zu einer noch besseren Verbindung zwischen dem Formteil und dem im Stoffgemisch enthaltenen Kunststoff.Ein konkretes Beispiel eines verwendbaren Stoffgemisches ist eine 1:3 Verdünnung mit destilliertem Wasser eines Imprägniermittels, das als organisches Lösungsmittel 2-Butoxy-ethanol enthält und darüber hinaus die folgenden technsichen Eigenschaften aufweist: Zündtemperatur in °C: 240 °C; untere Explosionsgrenze: 1,1 Vol-%; obere Explosionsgrenze: 10,6 Vol-%; Dampfdruck bei 20 °C: 15,37 mbar; Dichte bei 20 °C: 1,00 g/cm³; Wasserlöslichkeit (g/L): unlöslich; Viskosität bei 20 °C: 15 s 4 mm nach DIN 53211; Lösemitteltrennprüfung (%): < 3 % nach ADR/RID; Festkörpergehalt (%): 27,38 Gew-%;Lösemittelgehalte: Organische Lösemittel: 6 Gew-%, Wasser: 67 Gew-%.

Zum Inkontaktbringen des Stoffgemisches mit der zu behandelnden Oberfläche des Formteils kann das Formteil für eine Dauer zwischen dem Bruchteil einer Sekunde und 120 Minuten, bevorzugt 1 Sekunde bis 60 Minuten, besonders bevorzugt 10 Sekunden bis 10 Minuten in das Stoffgemisch getaucht werden. Alternativ kann das Stoffgemisch über einen auf die zu behandelnde Oberfläche des Formteils aufgesprüht oder aufgepinselt werden, entweder kontinuierlich über einen der zuvor definierten Zeiträume oder einmalig mit anschließender Wartezeit über einen der zuvor definierten Zeiträume vor dem nächsten Verfahrensschritt.

Das Inkontaktbringen des Stoffgemisches mit der zu behandelnden Oberfläche des Formteils kann bei einer Temperatur des Stoffgemisches zwischen 5 und 50 °C, vorzugsweise zwischen 15 und 30°C, besonders bevorzugt zwischen 20 und 25 °C (Raumtemperatur) erfolgen.

Das Hilfsmittel kann mehrmals verwendet werden. Das Hilfsmittel kann unter Umständen, jedenfalls aber im Fall von Kieselgel, regeneriert werden. Kieselgel wird durch Wärmeeinwirkung regeneriert, wobei die zuvor aufgenommenen Fluide wieder freigesetzt werden, sodass das Kieselgel seine Aufnahmefähigkeit größtenteils wiedererlangt. Nicht ohne weiteres wieder entfernbare Kunststoffanhaftungen und mechanischer Abrieb können die Wiederverwendbarkeit des Hilfsmittels einschränken, jedoch können die erfindungsgemäßen Formen von Kieselgel mindestens viermal regeneriert und nach jedem Regenerationsvorgang mehrmals wiederverwendet werden.

Das Inkontaktbringen des Formteils mit dem Stoffgemisch kann bei Überdruck erfolgen, wobei das Formteil und das Stoffgemisch in ein druckdichtes Behältnis eingebracht werden, und das Behältnis mit Überdruck beaufschlagt wird. Dadurch wird ein noch besseres Einbringen des Stoffgemisches in die Poren der Oberfläche sichergestellt. Vorteilhaft ist es hierbei, wenn vor dem Einbringen des Stoffgemisches in das Behältnis das Behältnis mit dem darin angeordneten Formteil mit Unterdruck (Vakuum) beaufschlagt wird. Das Stoffgemisch wird dann in das unter Unterdruck stehende Behältnis eingebracht und anschließend wird das Behältnis mit Überdruck beaufschlagt.

Damit wird vermieden, dass beim Einbringen des Stoffgemisches in das Behältnis Luft in den Poren eingeschlossen wird, sodass ein noch besseres Eindringen des Stoffgemisches in die Poren der Oberfläche des Formteils sichergestellt ist. Zudem kann sich der in dem Stoffgemisch aufgelöste Kunststoff bzw. Kunststoffgemisch beim Aushärten bzw. Austrocknen des Stoffgemisches noch besser in den Poren der Oberfläche des Formteils verankern.

Die Frage, ob nach der Behandlung mit dem Hilfsmittel nicht zu viel von dem Stoffgemisch von der Oberfläche eines Formteils abgenommen wurde, sodass die vorteilhaften Eigenschaften nicht ausreichend verwirklicht werden können, wurde experimentell beantwortet. Die behandelten Formteile weisen beispielsweise vergleichbar gute hydrophobe Eigenschaften auf wie Formteile, die das erfindungsgemäße Verfahren nicht durchlaufen haben. Es ist also festzustellen, dass durch das erfindungsgemäße Verfahren das Stoffgemisch nicht in einem solchen Ausmaß von der Oberfläche der Formteile entfernt wird, dass es das Erzielen der angestrebten verbesserten Eigenschaften zunichtemachen würde.

Nach dem Trocken der Oberfläche des Formteils kann die Oberfläche des Formteils poliert werden, wobei zum Polieren vorzugsweise keramische Polierelemente verwendet werden. Dabei wird das Formteil vorzugsweise in einer Poliereinrichtung, insbesondere Poliertrommel, Rundvibrator, oder Gleitschliffanlage poliert. Dabei kann das Formteil über einer Dauer zwischen 1 Minute und mehrere Tage, vorzugsweise zwischen 15 Minuten und 24 Stunden, besonders bevorzugt zwischen 1 und 8 Stunden, poliert werden.

Anstelle der keramischen Polierelemente können auch Streifen und/oder Kugeln (oder anders geformte Formteile) aus Stoff, Leder oder ähnlichen Materialien verwendet werden. Das imprägnierte Formteil kann auch mit einer Poliermaschine, etwa Handpoliergerät poliert werden. Durch das anschließende Polieren der imprägnierten Oberfläche kann diese noch weiter geglättet werden, oder es kann der Oberfläche ein besonderer Glanz verliehen werden.

### Bezugszeichen:

- 1: pulverbasiert additiv hergestelltes Formteil
- 2: Stoffgemisch zur Behandlung des Formteils
- 3: Hilfsmittel, das geeignet ist, das Stoffgemisch oder Bestandteile desselben aufzunehmen

## Patentansprüche

1. Verfahren zum Behandeln eines pulverbasiert additiv gefertigten Formteils, das aus einem ersten Kunststoff oder einem Verbundwerkstoff hergestellt ist, mit den Schritten:
(a) Inkontaktbringen des Formteils mit einem Stoffgemisch zum Imprägnieren und/oder Beschichten des Formteils;
wobei das Stoffgemisch wenigstens einen zweiten Kunststoff und wenigstens ein Fluid enthält;
(b) Inkontaktbringen des nach Schritt (a) behandelten Formteils mit einem Hilfsmittel;
**dadurch gekennzeichnet, dass** das Hilfsmittel geeignet ist, das Stoffgemisch oder Bestandteile desselben dadurch aufzunehmen, dass diese der Oberfläche des Hilfsmittels anhaften, in Poren oder anders geartete Hohlräume des Hilfsmittels eindringen, von dem Hilfsmittel absorbiert und/oder von dem Hilfsmittel chemisch gebunden werden.

2. Verfahren nach Anspruch 1 mit dem zusätzlichen Schritt:
(c) Abtrennen des Hilfsmittels von dem nach Schritt (b) behandelten Formteil.

3. Verfahren nach Anspruch 1 oder 2, wobei das Fluid N-Butylacetat, Butan-1-ol, Isotridecylalkohol, 2-Butoxy-ethanol, Aceton und/oder Wasser enthält.

4. Verfahren nach einem der Ansprüche 1 bis 3, wobei das Stoffgemisch bis zu 75 Gew.-%, bevorzugt 0,1 bis 30 Gew.-%, ferner bevorzugt 0,2 bis 28 Gew.-% oder 0,3 bis 26 Gew.-% und insbesondere bevorzugt 1 bis 12 Gew.-% des zweiten Kunststoffs enthält.

5. Verfahren nach einem der Ansprüche 1 bis 4, wobei das Hilfsmittel ein Trockenmittel, beispielsweise ein Zeolith, Natriumsulfat, Magnesiumsulfat, Blaugel oder Aluminiumoxid, bevorzugt aber Kieselgel, Kieselgur oder ein Gemisch derselben, stärker bevorzugt Kieselgel, ist.

6. Verfahren nach einem der Ansprüche 1 bis 5, wobei das Hilfsmittel in Gestalt eines Granulates, bevorzugt eines Kugelgranulates oder Zylindergranulates, von diesen ferner bevorzugt eines Zylindergranulates, verwendet wird.

7. Verwendung eines Hilfsmittels zum Aufnehmen eines Stoffgemischs und/oder von Bestandteilen desselben in einem Verfahren zum Behandeln eines pulverbasiert additiv gefertigten Formteils, hergestellt aus einem ersten Kunststoff oder einem Verbundwerkstoff;
wobei das Hilfsmittel das Stoffgemisch oder Bestandteile desselben dadurch aufnimmt, dass diese der Oberfläche des Hilfsmittels anhaften, in Poren oder anders geartete Hohlräume des Hilfsmittels eindringen, von dem Hilfsmittel absorbiert und/oder von dem Hilfsmittel chemisch gebunden werden.

## Claims

1. A method for treating a powder-based additively manufactured moulded part which is produced from a first plastics material or a composite material, comprising the steps of:
(a) bringing the moulded part into contact with a substance mixture for impregnating and/or coating the moulded part;
wherein the substance mixture contains at least one second plastics material and at least one fluid;
(b) bringing the moulded part treated according to step (a) into contact with an auxiliary agent;
**characterised in that** the auxiliary agent is suitable for receiving the substance mixture or components thereof by these adhering to the surface of the auxiliary agent, penetrating into pores or other types of cavities of the auxiliary agent, being absorbed by the auxiliary agent and/or being chemically bonded by the auxiliary agent.

2. The method according to claim 1, comprising the additional step of:
(c) separating the auxiliary agent from the moulded part treated according to step (b).

3. The method according to claim 1 or claim 2, wherein the fluid comprises N-butyl acetate, butan-1-ol, isotridecyl alcohol, 2-butoxy-ethanol, acetone and/or water.

4. The method according to any of claims 1 to 3, wherein the substance mixture contains up to 75 wt.%, preferably 0.1 to 30 wt.%, more preferably 0.2 to 28 wt.% or 0.3 to 26 wt.%, and particularly preferably 1 to 12 wt.%, of the second plastics material.

5. The method according to any of claims 1 to 4, wherein the auxiliary agent is a desiccant, for example a zeolite, sodium sulfate, magnesium sulfate, blue gel or aluminium oxide, but preferably silica gel, diatomaceous earth or a mixture thereof, more preferably silica gel.

6. The method according to any of claims 1 to 5, wherein the auxiliary agent is used in the form of a granulate, preferably a spherical granulate or cylinder granulate, and of these more preferably a cylinder granulate.

7. A use of an auxiliary agent for receiving a substance mixture and/or components thereof in a method for treating a powder-based additively manufactured moulded part which is produced from a first plastics material or a composite material;
wherein the auxiliary agent receives the substance mixture or components thereof by these adhering to the surface of the auxiliary agent, penetrating into pores or other types of cavities of the auxiliary agent, being absorbed by the auxiliary agent and/or being chemically bonded by the auxiliary agent.

## Revendications

1. Procédé pour le traitement d'une pièce moulée, fabriquée de manière additive à base de poudre, qui est réalisée à partir d'un premier matériau synthétique ou d'un matériau composite, présentant les étapes :
(a) mise en contact de la pièce moulée avec un mélange de substances en vue d'imprégner et/ou de revêtir la pièce moulée ;
le mélange de substances contenant au moins un deuxième matériau synthétique et au moins un fluide ;
(b) mise en contact de la pièce moulée traitée selon l'étape (a) avec un adjuvant ;
**caractérisé en ce que** l'adjuvant convient pour absorber le mélange de substances ou des constituants de celui-ci par le fait que celui-ci/ceux-ci adhère(nt) à la surface de l'adjuvant, pénètre(nt) dans des pores ou des espaces creux d'un autre type de l'adjuvant, est/sont absorbé(s) par l'adjuvant et/ou lié(s) chimiquement par l'adjuvant.

2. Procédé selon la revendication 1, présentant l'étape supplémentaire :
(c) séparation de l'adjuvant à partir de la pièce moulée traitée selon l'étape (b).

3. Procédé selon la revendication 1 ou 2, le fluide contenant de l'acétate de n-butyle, du butan-1-ol, de l'alcool isotridécylique, du 2-butoxy-éthanol, de l'acétone et/ou de l'eau.

4. Procédé selon l'une quelconque des revendications 1 à 3, le mélange de substances contenant jusqu'à 75 % en poids, de préférence 0,1 à 30 % en poids, plus préférablement 0,2 à 28 % en poids ou 0,3 à 26 % en poids et en particulier de préférence 1 à 12 % en poids du deuxième matériau synthétique.

5. Procédé selon l'une quelconque des revendications 1 à 4, l'adjuvant étant un dessiccateur, par exemple une zéolithe, le sulfate de sodium, le sulfate de magnésium, le gel bleu ou l'oxyde d'aluminium, de préférence cependant le gel silicique, le kieselguhr ou un mélange de ceux-ci, plus préférablement le gel silicique.

6. Procédé selon l'une quelconque des revendications 1 à 5, l'adjuvant étant utilisé sous forme d'un granulat, de préférence d'un granulat sphérique ou d'un granulat cylindrique, parmi ceux-ci plus préférablement sous forme d'un granulat cylindrique.

7. Utilisation d'un adjuvant pour absorber un mélange de substances et/ou de constituants de celui-ci dans un procédé de traitement d'une pièce moulée, fabriquée de manière additive à base de poudre, réalisée à partir d'un premier matériau synthétique ou d'un matériau composite ;
l'adjuvant absorbant le mélange de substances ou des constituants de celui-ci par le fait que celui-ci/ceux-ci adhère(nt) à la surface de l'adjuvant, pénètre(nt) dans des pores ou des espaces creux d'un autre type de l'adjuvant, est/sont absorbé(s) par l'adjuvant et/ou lié(s) chimiquement par l'adjuvant.
